# EUROPÄISCHE PATENTSCHRIFT

(11) **EP 3 010 670 B1**
(45) Veröffentlichungstag und Bekanntmachung des Hinweises auf die Patenterteilung: **15.11.2017**
(21) Anmeldenummer: 14735834.5
(22) Anmeldetag: 15.05.2014
(51) Int. Cl.: B22D 25/04, B22D 19/04, B22D 17/30, B22D 17/12, B22D 21/02, H01M 2/28, H01M 4/84, B22D 39/00, B22D 17/22, B22D 39/02

(54) **VERFAHREN ZUM ANGIESSEN VON VERBINDERN**
METHOD FOR CASTING CONNECTORS
PROCÉDÉ POUR COULER DES ÉLÉMENTS DE CONNEXION

(30) Priorität: 20.06.2013 AT 5032013
(43) Veröffentlichungstag der Anmeldung: 27.04.2016
(73) Patentinhaber: Rosendahl Nextrom GmbH, 8212 Pischelsdorf (AT)
(72) Erfinder: ARZT, Christian, A-8225 Pöllau (AT); PROKOP, Rainer, Richard, A-8274 Buch-St. Magdalena (AT); BÜLTERMANN, Bernd, A-8044 Graz-Weinitzen (AT); SPARI, Christian, Günther, A-8524 Bad Gams (AT); SIMONITSCH, Lukas, Martin, A-8010 Graz (AT)
(74) Vertreter: Beer & Partner Patentanwälte KG
(86) Internationale Anmeldenummer: PCT/AT2014/000110
(87) Internationale Veröffentlichungsnummer: WO 2014/201476

(56) Entgegenhaltungen:
- EP-A1- 1 479 465
- EP-A2- 1 479 464
- EP-B1- 1 339 514
- DE-A1- 2 747 133

## Beschreibung

Die Erfindung betrifft ein Verfahren zum Angießen von Polverbindern (Polbrücken) an die Fahnen von positiven bzw. negativen Bleiplatten von Blei-Säure-Batterien (EP 1 339 514 B1).

Die Polverbinder dienen dazu, einerseits die positiven und anderseits die negativen Bleiplatten in Plattenpaketen von Blei-Säure-Batterien miteinander elektrisch leitend zu verbinden.

Derartige Verfahren ("Angussverfahren") und Vorrichtungen ("Angussformen") sind bekannt. Verwiesen wird beispielhaft auf EP 1 339 514 B1, WO 2004/067208 A, WO 2007/128958, WO 94/16466 A, WO 99/04919 A und WO 91/05625 A.

Eine bekannte Angussform besteht aus einem Formenblock, in dem Hohlräume (Kavitäten) zum Ausbilden der Polverbinder (im Englischen: straps) vorgesehen sind. Die Gestalt der Formhohlräume entspricht dem Negativ des jeweiligen Verbinders. Des Weiteren sind zwei Zuführungen für flüssiges Blei vorgesehen, die miteinander verbunden sind (crossblock). Schließlich ist in der bekannten Angussform eine Grundplatte mit Ausstoßereinheit vorgesehen. Die Angussform umfasst weiters eine Kupplungseinheit, die das Verbinden der Angussform mit der Steuerung und einer Kühleinrichtung einer Angussmaschine übernimmt.

Die Funktionsweise einer Angussform nach dem Stand der Technik kann beispielhaft wie folgt beschrieben werden:
Die als Kanal ausgebildete Zuführung für flüssiges Blei wird mit flüssigem Angussblei gefüllt, das von einer Pumpe aus einem Reservoir (Schmelzkessel) für flüssiges Blei zugeführt wird. Das Füllstandsniveau im Kanal ist auf der gleichen Höhe wie ein geöffneter Überlauf, der auf der Pumpe montiert ist.

Während des Angussvorganges wird der Überlauf der Pumpe durch ein Ventil geschlossen und die Pumpendrehzahl angehoben. Dies hat zur Folge, dass das Füllstandsniveau im offenen Bleiförderkanal ansteigt und über den Trennsteg ("Wehr") in die Hohlräume im Formenblock fließt. Am Ende des Füllvorganges sind alle Hohlräume mit Blei gefüllt und haben ein etwas erhöhtes Niveau. Danach wird die Pumpe kurzzeitig ausgeschaltet und beendet das Fördern von Blei. Zur gleichen Zeit öffnet das Rückflussventil und das erhöhte Niveau an flüssigem Blei in der Form beginnt wieder abzusinken, bis das Niveau des Bleis in den Verbinder bildenden Hohlräumen der Form auf die Höhe des Trennsteges abgesunken ist.

Überschüssiges Blei fließt über den Überlauf der Pumpe wieder in den Schmelzkessel zurück. Um den Bleirückfluss zu beschleunigen, öffnet auch das Einlassventil, so dass Blei durch das stehende Pumpenrad zurückströmen kann. Zusätzlich wird auch noch ein Schnellentleerungsventil geöffnet, um Blei direkt in den Schmelzkessel zurückzuleiten. Während des Füllvorganges werden die Elemente (Plattensätze aus positiven und negativen Batterieplatten) in einer Spannkassette (Jig-Box) für das Eintauchen in das geschmolzene Blei, das sich in den Formhohlräumen des Formenblocks befindet, bereitgestellt. Die Platten werden nach Ablauf einer frei einstellbaren Zeitspanne in das Blei eingetaucht. Dies beginnt, sobald die Pumpe abgestellt ist und das Niveau an Blei abzusinken beginnt.

Wenn die Platten (genauer: deren Fahnen) in das geschmolzene Blei eingetaucht worden sind, beginnt die Kühlzeit, um das Blei des Verbinders abzukühlen und auszuhärten. Während dieser Zeit arbeitet die Formenkühlung, um auf die gewünschte Temperatur zu kommen und diese halten zu können.

Nach der Kühlzeit werden Ausstoßer ausgefahren und dabei auch die Aushebemechanik der Spannkassette betätigt. So werden die erstarrten, an die Fahnen der Batterieplatten angegossenen Verbinder aus der Form gedrückt/gehoben, womit der Angusszyklus beendet ist.

Die EP 1 339 514 B1 offenbart eine Vorrichtung und ein Verfahren zum Angießen von Polverbindern an Fahnen von Platten bevorzugt von Blei-Säure-Batterien, wobei ein Formenblock mit wenigstens einem Formhohlraum verwendet wird, wobei an Fahnen von Batterieplatten durch Füllen des Formhohlraumes mit einer wählbaren, vorbestimmten Menge an flüssigem Blei und Erstarrenlassen des Blei ein Polverbinder angegossen wird.

Aus der DE 29 25 297 A ist eine gattungsgemäße Vorrichtung bekannt, bei welcher geschmolzenes Blei mit Hilfe einer Förderpumpe aus einem Behälter über Zufuhrleitungen in einen Formhohlraum eingebracht wird. Dem Formhohlraum ist eine Dosiereinrichtung, welche die erforderliche Menge an flüssigem Blei bereitstellt, zugeordnet. Bei der DE 29 25 297 A ist die Förderpumpe als Kolbenpumpe ausgebildet, sodass der Hub der Kolbenpumpe die Menge an geschmolzenem (flüssigem) Blei regelt. Zumal bei der DE 29 25 297 A die Kolbenpumpe nicht dem Formhohlraum, sondern dem Zuflusskanal zugeordnet ist, ist nicht vorgesehen, die in Formhohlräume eingeführte Bleimenge abzumessen, da die Menge durch die Höhe eines Wehr, das Überlauf-Rückflusssystem und/oder das Zurücksaugen der Pumpe gesteuert wird.

Die EP 0 480 905 A1 beschreibt ein Verfahren zum volumendosierten Gießen einer Bleischmelze für Pole und Polbrücken, wobei das Dosieren und das Füllen des Formenhohlraums in der Angussform über ein getrenntes System von Schöpfwerken verwirklicht ist.

Die EP 1 479 464 A zeigt eine Spritzgussmaschine mit einem Vorratsbehälter für geschmolzenes Metall, wobei Metall aus einer Dosierkammer mit Hilfe eines Kolbens in eine Einspritzkammer gefördert und erst aus dieser mit Hilfe einer Einspritznadel (injection rod) in den Formhohlraum gedrückt wird.

Die EP 1 479 465 A zeigt eine ähnliche Spitzgussmaschine aber ohne Dosierkammer mit Dosierkolben.

Der DE 27 47 133 A ist eine Dosiervorrichtung für geschmolzenes Metall, das in einen Einspritzzylinder oder in eine Einspritzkammer gefördert werden soll, zu entnehmen. Diese Dosiervorrichtung umfasst einen Einspritzzylinder, dem eine Pumpe vorgeschaltet ist. Vorgesehen ist weiters eine Leitung mit zwei Detektoren, über welche die Menge an Metall im Einspritzzylinder geregelt wird (vgl. Seite 11/12). Ein Ändern der Stellung des Kolbens im Einspritzzylinder ist nicht vorgesehen.

Festzuhalten ist, dass weder die EP 1 479 464 A noch die EP 1 479 465 A und die DE 27 47 133 A das Angießen von Polverbindern an Fahnen von Batterieplatten betrifft.

Ausgehend von dem genannten Stand der Technik liegt der Erfindung die Aufgabe zugrunde, ein Verfahren (Angussverfahren) der eingangs genannten Gattung im Hinblick auf eine genauere Betriebsweise zu verbessern, indem der Gebrauch von überschüssigem Blei verhindert wird und die Menge an flüssigem Blei an den Formhohlraum angepasst werden kann.

Dies wird erfindungsgemäß mit einem Verfahren erreicht, das die Merkmale von Anspruch 1 aufweist.

Bevorzugte und vorteilhafte Ausgestaltungen des erfindungsgemäßen Verfahrens sind Gegenstände der abhängigen Unteransprüche.

Der wesentliche Unterschied der erfindungsgemäßen Verfahrensweise zu den bekannten Verfahren des Standes der Technik besteht darin, dass bei der Erfindung die Formhohlräume im Formenblock nicht mehr geflutet, sondern mit einer vordefinierten (wählbaren) Menge an flüssigem Blei gefüllt werden.

Dabei ist erfindungsgemäß vorgesehen, dass das flüssige Blei in einer Dosiereinrichtung dosiert wird und dann aus der Dosiereinrichtung in den (der Dosiereinrichtung zugeordneten) Formhohlraum des Formenblocks übergeführt wird.

Dabei ist vorgesehen, dass der Formhohlraum mit flüssigem Blei aus der Dosiereinrichtung von unten her gefüllt wird.

Anders als im Stand der Technik, wo versucht wird, durch Fluten mit geschmolzenem Blei den Formhohlraum der Angussform zu dosieren, wird bei der Erfindung die, für das Angießen der Polverbinder, jeweils erforderliche Menge an geschmolzenem Blei in der Dosiereinrichtung bereitgestellt und dann aus der Dosiereinrichtung in den der Dosiereinrichtung zugeordneten Formhohlraum, in den die Fahnen der Batterieplatten ragen, übergeführt.

Diese Arbeitsweise erlaubt es durch Einstellen der Dosiereinrichtung, die jeweils erforderliche Menge an geschmolzenem Blei anzupassen und so den Erfordernissen (Batterietyp, Ausbildung der Polverbinder, der Laschen an Polverbindern für die Verbindung in benachbarten Zellen einer Batterie befindlichen Batterieplattenpaketen und der Polstengel) Rechnung zu tragen.

Das erfindungsgemäße Verfahren kann allgemein und beispielhaft wie folgt beschrieben werden:
Im Ausgangszustand ist die erfindungsgemäße Vorrichtung auf Betriebstemperatur erhitzt. Die Bleizuführleitung und der Zylinder der Dosiereinrichtung für das Dosieren von flüssigem Blei in den Formhohlraum des Formenblocks sind noch nicht mit flüssigem Blei gefüllt.

Der Kolben in dem Zylinder der Dosiereinrichtung befindet sich in der Füllposition, d.h. er ist zurückgezogen, und auch das Auswerfersystem sowie die Einrichtung zum Feinjustieren der Dosierung sind in der Bereitschaftstellung (inaktive Position). Des Weiteren ist in diesem Zustand der Verschluss, der in der Bleizuführleitung vorgesehen ist, in einer Stellung, in der er die Bleizuführleitung zum Zylinder der Dosiereinrichtung unterbricht.

Als erster Schritt wird die Bleizuführleitung (als Umlauf im System oder auf einer Seite geschlossen ausgeführt) mit flüssigem Angussblei gefüllt. Dabei wird Angussblei von einer (angeflanschten) Pumpe aus einem Vorratsbehälter ("Schmelzkessel") für flüssiges Blei in das System gepumpt.

Am Beginn des Angussvorganges wird die Bleizuführleitung geöffnet, indem ein Absperrorgan, beispielsweise ein Schieber, in seine die Bleizuführleitung öffnende Stellung bewegt wird, und flüssiges Blei strömt in den Dosierzylinder. Die Füllmenge bzw. Füllhöhe kann entweder durch die Lage der Einlassöffnung in den Dosierzylinder, durch die flüssiges Blei aus der Bleizuführleitung in den Dosierzylinder strömt, oder alternativ durch ein Überlaufsystem bestimmt werden.

Eine weitere Möglichkeit, die kumulativ oder alternativ zu beiden vorgenannten Möglichkeiten gewählt werden kann, besteht darin, die Lage des Kolbens im Zylinder der Dosiereinheit entsprechend der gewünschten Menge an Blei einzustellen, und gegebenenfalls die Bleimenge zusätzlich durch Feinjustieren der Lage des Kolbens der Dosiereinrichtung im Zylinder der Dosiereinheit einzustellen.

Nachdem der Zylinder der Dosiereinheit mit flüssigem Blei gefüllt worden ist, wird die Bleizuführleitung durch Betätigen des Absperrorganes (Schieber) wieder geschlossen. Als nächstes wird der Kolben im Zylinder durch eine dem Kolben zugeordnete Hubeinheit zum Formenblock hin bewegt, bis der Kolben den unteren Rand des Formhohlraumes erreicht hat. Dadurch wird die in der Dosiereinrichtung enthaltene, also vordefinierte, Menge an flüssigem Blei in den Formhohlraum (Kavität) abgegeben (übergeführt). Während des Füllens des Formhohlraumes mit flüssigem Blei werden Plattensätze, an deren Fahnen elektrisch leitend verbindende Polverbinder, gegebenenfalls mit Laschen oder Polstengeln, angegossen werden sollen, beispielsweise in einer Spannkassette gehalten, für das Eintauchen in das geschmolzene Blei im Formhohlraum bereitgestellt. Die Fahnen der Batterieplatten in den Plattensätzen können auch bereits während des Füllvorganges des Formhohlraumes in den Formhohlraum eingetaucht werden.

Sobald die Batterieplatten der Plattensätze mit den an ihnen vorgesehenen Fahnen in den Formhohlraum eingeführt und in das in diesem befindliche geschmolzene Blei eingetaucht sind, wird mit dem Kühlen begonnen. Durch das Kühlen wird das Blei des Polverbinders, der mit den Fahnen durch Anschmelzen verbunden ist, gekühlt und es verfestigt sich (erstarrt).

Sobald das Blei erstarrt ist, werden die Ausstoßer durch Betätigen des Auswerfersystems ausgefahren und gleichzeitig die Spannkassette, von der die Plattenpakete gehalten sind, angehoben. So werden die ausgehärteten und an die Fahnen der Batterieplatten im Plattenpaket angegossenen Polverbinder aus der Form herausbewegt.

Sobald dies geschehen ist, werden der Kolben der Dosiereinrichtung, das Auswerfersystem und die Hubeinheit für den Kolben der Dosiereinrichtung in die Ausgangsposition zurückgebracht und der nächste Angusszyklus von Polverbindern kann beginnen.

In der Praxis kann der Kolben des Dosierzylinders einen Durchmesser zwischen 3 und 200 mm haben.

Üblicherweise wird bei dem erfindungsgemäßen Verfahren mit einer Temperatur des flüssigen Bleis zwischen 360 und 520°C gearbeitet.

In einer bevorzugten Ausführungsform der Erfindung ist vorgesehen, dass der Füllstand an flüssigem Blei im Zylinder der Dosiereinrichtung beispielsweise durch einen Sensor überwacht wird.

Das in der Bleizuführung vorgesehene Absperrorgan kann ein Schieber oder ein Hahn sein.

Weitere Einzelheiten und Merkmale der Erfindung ergeben sich aus der nachstehenden Beschreibung eines bevorzugten Ausführungsbeispiels einer erfindungsgemäßen Angussvorrichtung unter Bezugnahme auf die Zeichnungen. Es zeigt:
- Fig. 1: im Schnitt (nach Linie E-E in Fig. 2) eine Angussvorrichtung,
- Fig. 2: die Angussvorrichtung aus Fig. 1 in einem zum Schnitt E-E senkrecht ausgerichteten Schnitt und die
- Fig. 3 bis 7: Darstellungen gemäß Fig. 2 mit verschiedenen Stufen beim Ausführen eines Angießvorganges mit Hilfe der erfindungsgemäßen Vorrichtung.

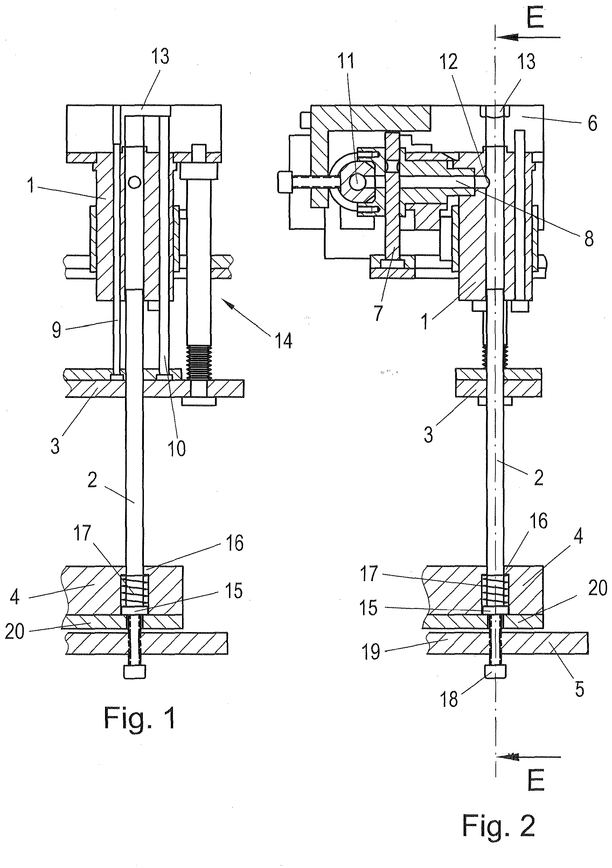

Eine mit ihren wesentlichen Teilen in Fig. 1 und 2 gezeigte Angussvorrichtung umfasst eine Dosiereinrichtung 14 mit einem Zylinder 1 und mit einem Kolben 2. Durch Betätigen des Kolbens 2 kann flüssiges Blei dosiert in einen Formhohlraum 13 (Kavität) in einem Formenblock 6 von unten her eingefüllt werden. Der Formenblock 6 weist zumindest einen Formhohlraum 13 auf.

Zum Betätigen des Kolbens 2 der Dosiereinrichtung 14 in dem Zylinder 1 ist eine Hubeinheit 4 vorgesehen.

Das der Hubeinheit 4 zugeordnete Ende des Kolbens 2 der Dosiereinrichtung 14 trägt einen Flansch 15. Zwischen einem ringförmigen Vorsprung 16 an der Öffnung, durch die der Kolben 2 in die Hubeinheit 4 ragt, und dem Flansch 15 ist ein elastisches Element, z.B. eine Schraubenfeder 17, angeordnet.

Dem unteren, in der Hubeinheit 4 aufgenommenen Ende des Kolbens 2 ist eine Feinustierung 5 zugeordnet. Die Feinjustierung 5 umfasst eine Stellschraube 18, die in einen Träger 19 eingeschraubt ist. Die Lage des Trägers 19 kann verstellt werden, bleibt aber während eines Angusszyklus unverändert. Durch Verstellen der Stellschraube 18 kann die Lage des Kolbens 2 im Zylinder 1, während der Zylinder 1 mit Blei gefüllt wird, eingestellt werden. Wegen der Feder 17 wird der Kolben 2 beim Anheben durch die Hubeinheit 4 wieder in Anlage an den Anschlag 20 der Hubeinheit 4 gedrückt. Dies hat den Vorteil, dass der Kolben 2 unabhängig von der Stellung der Feinjustierung 5 beim Anheben (Füllen des Formhohlraumes 13 mit Blei) um den jeweils eingestellten Hub gehoben wird, ohne dass der Hub der Hubeinheit 4 geändert werden muss.

Flüssiges Blei wird über eine Bleizuführleitung 8, der als Absperrorgan ein Schieber 7 zugeordnet ist, aus einer Leitung 11, die als Umlaufsystem oder auf einer Seite geschlossen ausgeführt sein kann, zugeführt.

Die Menge an Blei im Dosierzylinder 1 wird einerseits durch die Lage des Kolbens 2 im Zylinder 1 und andererseits durch die Lage der Mündung 12 der Bleizuführleitung 8 in den Hohlraum des Zylinders 1 bestimmt.

Die alternative Möglichkeit, ein Überlaufsystem (mit einer Wehr) zu verwenden, ist in den Zeichnungen nicht dargestellt.

Wie erwähnt kann die Menge an Blei, die von der Dosiereinrichtung 14 in den Formhohlraum 13 im Formenblock 6 eingefüllt wird, zusätzlich durch eine Feinjustiereinrichtung 5, mit der die Lage des Kolbens 2 im Zylinder 1 beim Füllen der Dosiereinrichtung 14 mit Blei geändert werden kann, eingestellt werden.

Die erfindungsgemäße Angussvorrichtung umfasst weiters ein Auswerfersystem 3 mit Auswerfern 9 und 10. Mit Hilfe des Auswerfersystems 3 und gegebenenfalls des Kolbens 2 kann ein Polverbinder, der an die an den Platten der Plattenpakete vorgesehenen Fahnen angegossen worden ist, aus dem Formhohlraum 13 des Formenblocks 6 ausgestoßen werden.

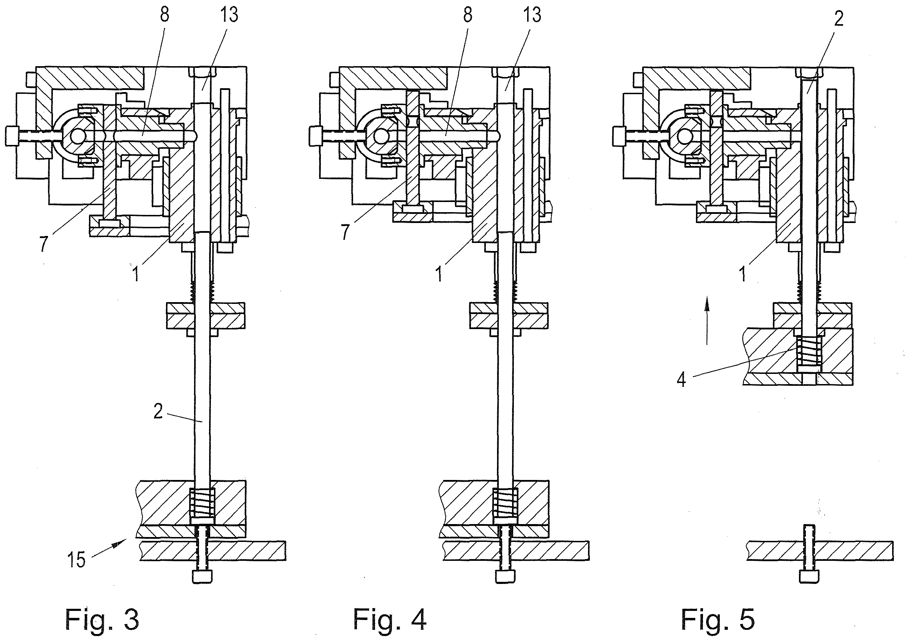

Die Arbeitsweise der in Fig. 1 und 2 beispielhaft gezeigten Ausführungsform einer Angussvorrichtung zum Ausführen des erfindungsgemäßen Angussverfahrens wird nachstehend anhand der Fig. 3 bis 7 beschrieben.

In Fig. 3 wird die Stufe gezeigt, in der flüssiges Blei durch die Bleizuführleitung 8 bei geöffnetem Schieber 7 in den Zylinder 1 eingefüllt wird, bis der gewünschte Füllstand (beispielsweise definiert durch die Lage der Mündung 12 der Bleizuführleitung 8 im Zylinder 1) erreicht ist.

Sobald der vorgegebene Füllstand an flüssigem Blei in der Dosiereinrichtung 14 erreicht worden ist, wird durch Betätigen des Schiebers 7 die Bleizuführleitung 8 geschlossen, sodass kein flüssiges Blei mehr aus der Bleizuführleitung 8 in den Zylinder 1 einströmen kann (Fig. 4).

Nun wird durch Betätigen der Hubeinheit 4 des Kolbens 2, wie in Fig. 5 gezeigt, der Kolben 2 im Zylinder 1 der Dosiereinrichtung 14 nach oben bewegt, um das flüssige Blei in den Formhohlraum 13 des Formenblocks 6 einzufüllen. Während des Füllens des Formhohlraumes 13 mit Blei oder kurz danach werden die Fahnen der Batterieplattenpakete in den Formhohlraum 13 eingetaucht. Sobald dies geschehen ist, wird der Formenblock 6 und damit das in dem wenigstens einen Formhohlraum 13 enthaltene, einen Polverbinder bildende Blei gekühlt.

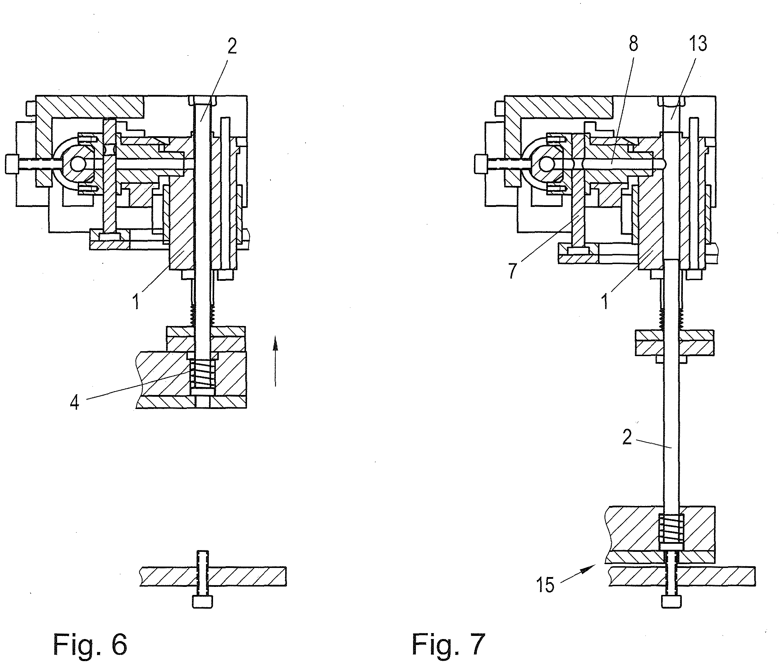

Nachdem das Kühlen abgeschlossen ist, werden durch Betätigen des Auswerfersystems 3 die Auswerfer 9 und 10 und auch der Kolben 2 nach oben bewegt, um den an Fahnen von Batterieplatten angegossenen Polverbinder aus dem Formhohlraum 13 auszuwerfen (Fig. 6). Dabei kann der Hub etwa 3 mm betragen.

Sobald dies geschehen ist, wird (vgl. Fig. 7) die Vorrichtung in die Stellung gemäß Fig. 3 zurückgefahren und ein neuer Angusszyklus gestartet.

Zusammenfassend kann ein Ausführungsbeispiel der Erfindung wie folgt beschrieben werden:
Dem Formhohlraum 13 eines Formenblocks 6 ist eine Dosiereinheit 14 für flüssiges Blei zugeordnet. Die Dosiereinheit 14 umfasst einen Zylinder 1, dem flüssiges Blei über eine absperrbare Leitung 8 zugeführt wird, und einen Kolben 2, der zum Überführen von flüssigem Blei in den Formhohlraum 13 anhebbar ist, um an Fahnen von Batterieplatten Polverbinder anzugießen.

## Patentansprüche

1. Verfahren zum Angießen von Polverbindern an Fahnen von Platten bevorzugt von Blei-Säure-Batterien, wobei ein Formenblock (6) mit wenigstens einem Formhohlraum (13) verwendet wird, wobei an Fahnen von Batterieplatten durch Füllen des Formhohlraumes (13) mit einer wählbaren, vorbestimmten Menge an flüssigem Blei und Erstarrenlassen des Bleis ein Polverbinder angegossen wird, **dadurch gekennzeichnet, dass** die für das Angießen der Polverbinder jeweils erforderliche Menge an flüssigem Blei in einer dem Formhohlraum (13) im Formenblock (6) zugeordneten Dosiereinrichtung (14), umfassend einen Zylinder (1) und einen in diesem verschiebbaren Kolben (2), bereitgestellt wird, wobei der Kolben (2) in dem Zylinder (1) der Dosiereinrichtung (14) sich in der Füllposition befindet, in der er zurückgezogen ist, und dass das flüssige Blei dem Formhohlraum (13) aus der Dosiereinrichtung (14) von unten her in den der Dosiereinrichtung (14) zugeordneten Formhohlraum (13), in den die Fahnen der Batterieplatten ragen, übergeführt wird, indem der Kolben (2) in den Zylinder (1) der Dosiereinheit (14) durch eine dem Kolben (2) zugeordnete Hubeinheit (4) hin verschoben wird.

2. Verfahren nach Anspruch 1, **dadurch gekennzeichnet, dass** der Kolben (2) im Zylinder (1) zum Formenblock (6) hin verschoben wird.

3. Verfahren nach Anspruch 1 oder 2, **dadurch gekennzeichnet, dass** der Formhohlraum (13) durch betätigen einer Absperrvorrichtung (7), die der Dosiereinrichtung (14) zugeordnet ist, verschlossen wird.

4. Verfahren nach einem der Ansprüche 1 bis 3, **dadurch gekennzeichnet, dass** der Dosiereinrichtung (14) flüssiges Blei über eine als Umlaufsystem ausgebildete Leitung (8) zugeführt wird.

5. Verfahren nach einem der Ansprüche 1 bis 4, **dadurch gekennzeichnet, dass** eine in den Hohlraum des Zylinders (1) der Dosiereinheit (14) mündende Leitung (8) zum Zuführen von geschmolzenem Blei während des Überführens von geschmolzenem Blei in den Formhohlraum (13) durch eine Absperrvorrichtung (7) verschlossen ist.

6. Verfahren nach Anspruch 5, **dadurch gekennzeichnet, dass** als Absperrvorrichtung (7) ein Schieber verwendet wird.

7. Verfahren nach Anspruch 5, **dadurch gekennzeichnet, dass** als Absperrvorrichtung (7) ein Hahn verwendet wird.

8. Verfahren nach einem der Ansprüche 1 bis 7, **dadurch gekennzeichnet, dass** die in der Dosiereinrichtung (14) bereitgestellte Menge an geschmolzenem Blei zusätzlich durch Feinjustieren der Lage oder der Bewegung des Kolbens (2) der Dosiereinrichtung (14) im Zylinder (1) der Dosiereinheit (14) eingestellt wird.

9. Verfahren nach einem der Ansprüche 1 bis 8, **dadurch gekennzeichnet, dass** nach dem Erstarren des Bleis in dem Formhohlraum (13) Auswerfer (9, 10) betätigt und die ausgehärteten und an die Fahnen der Batterieplatten im Plattenpaket angegossenen Polverbinder aus dem Formhohlraum (13) herausbewegt werden.

10. Verfahren nach einem der Ansprüche 1 bis 9, **dadurch gekennzeichnet, dass** der Kolben (2) im Zylinder (1) bis in eine Auswurfstellung angehoben wird.

## Claims

1. Method for casting pole connectors onto lugs of plates, preferably of lead-acid-batteries, whereby a molding block (6) with at least one molding cavity (13) is used, whereby a connector is cast onto lugs of battery plates by filling the mold cavity (13) with a selectable, predetermined amount of liquid lead and allowing the lead to solidify, **characterized in that** the each required amount of liquid lead is prepared in a metering device (14) which is coordinated to the mold cavity (13) in the molding block (6) and which comprises a cylinder (1) and a piston (2) displaceable in it, whereby the piston (2) in the cylinder (1) of the metering device (14) is in the filling position, in which it is retracted, and that the liquid lead is transferred to the mold cavity (13) from the metering device (14) from below into the mold cavity (13) coordinated to the mold cavity (13), into which the lugs of the battery plates project, by displacing the piston (2) of the metering device (14) by a stroke unit (4) coordinated to the piston (2).

2. Method according to claim 1, **characterized in that** the piston (2) is moved in the cylinder (1) toward the molding block (6).

3. Method according to claim 1 or 2, **characterized in that** the molding cavity (13) is closed by actuating a shut-off device, which is coordinated to the metering device (14).

4. Method according to one of claims 1 to 3, **characterized in that** liquid lead is supplied to the metering system (14) via a line (8) that is designed as a circulation system.

5. Method according to one of claims 1 to 4, **characterized in that** a line (8) for feeding molten lead that empties into the recess of the cylinder (1) of the metering unit (14) is closed by a shut-off device (7) during the transfer of molten lead into the molding cavity (13).

6. Method according to claim 5, **characterized in that** a slide valve is used as the shut-off device (7).

7. Method according to claim 5, **characterized in that** a cock is used as the shut-off device (7).

8. Method according to one of claims 1 to 7, **characterized in that** the amount of molten lead that is prepared in the metering system (14) is adjusted in addition by adjusting of the position or the movement of the piston (2) of the metering system (14) in the cylinder (1) of the metering unit (14).

9. Method according to one of claims 1 to 8, **characterized in that** after the lead is solidified in the molding cavity (13), ejectors (9, 10) are actuated, and the pole connectors that are hardened and cast onto the lugs of the battery plates in the plate packet are moved out from the molding cavity (13).

10. Method according to one of claims 1 to 9, **characterized in that** the piston (2) is lifted in the cylinder (1) into an ejecting position.

## Revendications

1. Procédé pour l'enrobage de connecteurs de pôles sur des barrettes de plaques, de préférence de batteries plomb-acide, dans lequel un bloc de moule (6) muni d'au moins une cavité de moule (13) est utilisé, un connecteur de pôles étant coulé sur des barrettes de plaques de batterie par le remplissage de la cavité de moule (13) avec une quantité de plomb liquide pouvant être choisie et prédéterminée et la solidification du plomb, **caractérisé en ce que** la quantité de plomb liquide nécessaire pour mouler le connecteur de pôles est fournie par un dispositif de dosage (14) associé à la cavité de moule (13) dans le bloc de moule (6), comprenant un cylindre (1) et un piston (2) capable de translation dans celui-ci, le piston (2) dans le cylindre (1) du dispositif de dosage (14) se trouvant dans la position de remplissage dans laquelle il est rétracté, et **en ce que** le plomb liquide est amené vers la cavité de moule (13) à partir du dispositif de dosage (14) par le bas dans la cavité de moule (13) associée au dispositif de dosage (14) dans laquelle dépassent les barrettes des plaques de batterie, par le déplacement du piston (2) dans le cylindre (1) de l'unité de dosage (14) à l'aide d'une unité de déplacement (4) associée au piton (2).

2. Procédé selon la revendication 1, **caractérisé en ce que** le piston (2) est déplacé dans le cylindre (1) en direction du bloc de moule (6).

3. Procédé selon la revendication 1 ou 2, **caractérisé en ce que** la cavité de moule (13) est fermée par l'actionnement d'un dispositif de fermeture (7) associé au dispositif de dosage (14).

4. Procédé selon l'une des revendications 1 à 3, **caractérisé en ce que** du plomb liquide est amené au dispositif de dosage (14) par une conduite (8) réalisée comme un système de circulation.

5. Procédé selon l'une des revendications 1 à 4, **caractérisé en ce qu'**une conduite (8) débouchant dans la cavité du cylindre (1) de l'unité de dosage (14) pour amener du plomb fondu est fermée par un dispositif de fermeture (7) pendant le transfert de plomb fondu dans la cavité de moule (13).

6. Procédé selon la revendication 5, **caractérisé en ce qu'**une vanne à tiroir est utilisée comme dispositif de fermeture (7).

7. Procédé selon la revendication 5, **caractérisé en ce qu'**un robinet est utilisé comme dispositif fermeture.

8. Procédé selon l'une des revendications 1 à 7, **caractérisé en ce que** la quantité de plomb fondu disponible dans le dispositif de dosage (14) est en outre ajustée par le réglage fin de la position ou du mouvement du piston (2) du dispositif de dosage (14) dans le cylindre (1) de l'unité de dosage (14).

9. Procédé selon l'une des revendications 1 à 8, **caractérisé en ce qu'**après la solidification du plomb dans la cavité de moule (13), des éjecteurs (9, 10) sont actionnés et les connecteurs de pôles enrobés sur les barrettes de la plaque de batterie dans le paquet de plaques sont déplacés hors de la cavité de moule (13).

10. Procédé selon l'une des revendications 1 à 9, **caractérisé en ce que** le piston (2) est soulevé dans le cylindre (1) jusqu'à une position d'éjection.
